# EUROPEAN PATENT APPLICATION

(11) **EP 3 591 933 A1**
(43) Date of publication of application: **08.01.2020**
(21) Application number: 19183642.8
(22) Date of filing: 01.07.2019
(51) Int. Cl.: H04L 29/06, G06F 9/455

(54) **METHOD FOR REQUESTING A SECURITY GROUP FOR A PRIVATE CLOUD**

(30) Priority: 02.07.2018 PL 42614718
(71) Applicant: Atos Global Delivery Center Polska Sp. z o.o. Sp. K., 85-240 Bydgoszcz (PL)
(72) Inventor: ZHUK, Olena, 40-018 Katowice (PL); DZIUBI SKI, Artur, 85-795 Bydgoszcz (PL); SCHOLLE, Oliver, 22455 Hamburg (DE); CLAPA, Konrad, 93-008 Lodz (PL)
(74) Representative: LLR

(57) **Abstract**

In this method for requesting a security group (4) for a private cloud (10), a backend automation creates a first security group that holds IP addresses of virtual machines that are used as destination for firewall rules and a second security group that contains the virtual machines names and that is used for filtering the virtual machines by the means of firewall rules. The backend automation is hidden from a user of the method.

## Description

The invention relates to a private cloud. More precisely, the invention relates to a method for requesting a security group for a private cloud.

A cloud can be defined as a pool of resources that can be used for both storing and processing data. There are three types of clouds in the modern IT: public, private and hybrid. Hybrid clouds are combination of private and public clouds. Public clouds are hosted in cloud provider data centers and are accessible over network. Most well-known public clouds are AWS, GCP and Azure. Private clouds are hosted on customer premises. However, securing virtual machines in a private cloud may represent a complicated task for users.

One goal of the invention is to give the users a simple and easy way of securing virtual machines in a private cloud.

To this end, a method is provided according to the invention for requesting a security group for a private cloud, comprising the step in which a backend automation creates a first security group that holds IP addresses of virtual machines that are used as destination for firewall rules and a second security group that contains the virtual machines names and that is used for filtering the virtual machines by the means of firewall rules, wherein the backend automation is hidden from a user of the method.

The Applicant has developed its own private cloud called Digital Private Cloud (DPC). The digital private cloud offers compute, storage and network services. All those services are automated and can be ordered from a portal which name is ServiceNow. Each service may offer multiple functionalities that are mapped to catalog items in service catalog. DPC is based on software developed by VMware company. The components used in this invention are vSphere, VMware NSX, vRealize Orchestrator.

The private cloud offers much more flexibility than a public cloud. It can be customized according to customer needs. Therefore organizations choose to use a private cloud for hosting applications that have specific requirements that cannot be fulfilled by a public cloud. The other reason to use a private cloud may be a cost factor. Applications need to be refactored before moving them to a public cloud. Lift and shift method of moving virtual machines from legacy environment to a public cloud is generating unnecessary costs. The refactoring of an application is a time and cost consuming exercise. For this reason, a private cloud is still a best choice for hosting legacy application.

The work for delivering the functionalities of the private cloud is done by backend VMware software and automation workflows designed and developed by the Applicant. Therefore, only the basic and necessary input is required from a requester. The requester needs just to create security groups and firewall rules that will be opened for the security groups. It is understood that the method permits to have an experience that is as user-friendly as the one provided by public clouds. In addition, this method is implemented through a human-machine interface under the form of a portal which can command the execution of the step of the method.

There are number of network objects being created in NSX that improve performance of the firewall and allow to deliver the functionality. The requester is interested in the functionality and ease of use therefore displaying the backend automation is not important.

Also provided according to the invention are:
- a computer program comprising code instructions able to command the execution of the steps of a method as recited above,
- a storage medium on which is recorded a computer program as recited above, and
- a method for uploading a computer program as recited above in view of its downloading on a communication network.

A system is also provided according to the invention for requesting a security group for a private cloud, comprising automated means comprising a backend automation arranged for creating a first security group that holds IP addresses of virtual machines that are used as destination for firewall rules and a second security group that contains the virtual machines names and that is used for filtering the virtual machines by the means of firewall rules, wherein the backend automation is hidden from a user of the method.

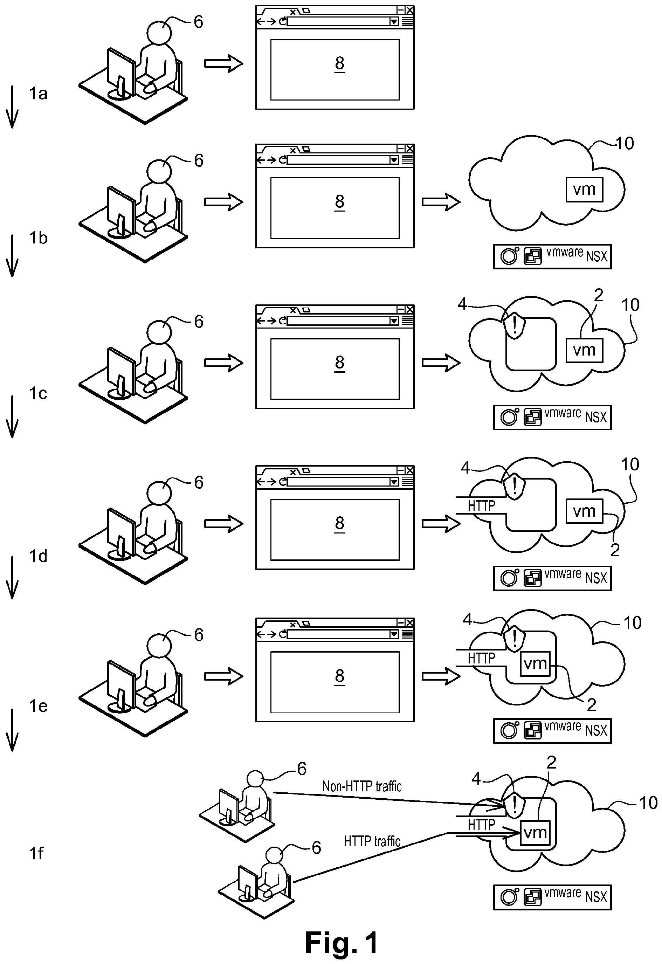

We will now present an embodiment of the invention given as a non-limitative example and based on the attached drawings on which the only figure, figure 1, is a flowchart showing request of IT services following a method according to the invention.

Figure 1 illustrates how a virtual machine 2 and a security group 4 is requested by a requester 6 from a portal 8 and created in a private cloud 10. Next, firewall rules are created for the security group 4 and the virtual machine 2 is placed in the security group 4.

At step 1a, the requester 6 logs into the ServiceNow portal 8 of a digital private cloud (DPC). At step 1b, he orders the creation of the virtual machine 2. The portal 8 contacts a DPC automation software. Workflows provision virtual machine 2 into vSphere platform. No network traffic is allowed to the virtual machine 2 yet.

The requester 6 then orders the creation of the security group 4 at step 1c. This time the backend automation creates multiple NSX objects invisible to the requester 6. The requester 6 then orders firewall rules for the security group at step 1d. Again the automation creates multiple NSX objects. Finally, at step 1e, the requester 6 orders assignment of the virtual machine 2 to the security group 4. Now the virtual machine 2 is protected from any network traffic but the traffic allowed by the firewall rules, as illustrated at step 1f.

The invention is not limited to the embodiment described above. Other embodiments will appear clearly to the skilled person.

## Claims

1. A method for requesting a security group (4) for a private cloud (10), comprising the step in which a backend automation creates a first security group that holds IP addresses of virtual machines that are used as destination for firewall rules and a second security group that contains the virtual machines names and that is used for filtering the virtual machines by the means of firewall rules, **characterized in that** the backend automation is hidden from a user of the method.

2. A computer program comprising code instructions able to command the execution of the steps of a method according to the preceding claim.

3. A storage medium on which is recorded a computer program according to the preceding claim.

4. A method for uploading a computer program according to claim 2 in view of its downloading on a communication network.

5. A system for requesting a security group (4) for a private cloud (10), comprising automated means comprising a backend automation arranged for creating a first security group that holds IP addresses of virtual machines that are used as destination for firewall rules and a second security group that contains the virtual machines names and that is used for filtering the virtual machines by the means of firewall rules, **characterized in that** the backend automation is hidden from a user of the method.
